(19) Europäisches Patentamt / European Patent Office / Office européen des brevets

(11) **EP 4 458 148 A1**

(12) **EUROPEAN PATENT APPLICATION**
published in accordance with Art. 153(4) EPC

(43) Date of publication:
**06.11.2024 Bulletin 2024/45**

(21) Application number: **23756286.3**

(22) Date of filing: **09.02.2023**

(51) International Patent Classification (IPC):
***A01M 1/14*** *(2006.01)*

(52) Cooperative Patent Classification (CPC):
**A01M 1/14;** Y02A 50/30

(86) International application number:
**PCT/JP2023/004426**

(87) International publication number:
**WO 2023/157760 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.02.2022   JP 2022023978**

(71) Applicant: **Kuraray Trading Co., Ltd.**
**Osaka-shi, Osaka 530-8611 (JP)**

(72) Inventor: **AKIBA Eiji**
**Osaka-shi, Osaka 530-8611 (JP)**

(74) Representative: **Müller-Boré & Partner**
**Patentanwälte PartG mbB**
**Friedenheimer Brücke 21**
**80639 München (DE)**

(54) **AMBULATORY PEST TRAPPING DEVICE**

(57)    The ambulatory pest trapping device (1) includes an upper sheet (2) on which an ambulatory pest (B) is capable of crawling, a lower sheet (4) on which the ambulatory pest (B) is capable of crawling, a corrugated intermediate sheet (31) which is provided between the upper sheet (2) and the lower sheet (4) and with which the ambulatory pests (B) is capable of coming into contact. The ambulatory pest trapping device (1) includes a space (10) which has a tapered shape as a tapered portion of the intermediate sheet (31) and in which the ambulatory pest (B) is captured, and an entrance (11) through which the ambulatory pest (B) is capable of entering into the space (10). At least one of the upper sheet (2), the lower sheet (4), or the intermediate sheet (31) is an adhesive sheet with which the ambulatory pests (B) is capable of coming into contact.

FIG.1

**Description**

TECHNICAL FIELD

The present invention relates to an ambulatory pest trapping device that traps ambulatory pests by an adhesive surface.

BACKGROUND ART

Ambulatory pests include bed bugs, ants, mites, centipedes, and millipedes that may bite or sting humans, causing harm to a human body. In addition, there are ambulatory pests which are unpleasant pests such as cockroaches that have little direct adverse effect on a human body, but bring a sense of discomfort. Against these ambulatory pests, there have been proposed various pest control methods and trapping devices.

Bed bugs (formerly also called "Nankinmushi") are blood-sucking insects. Among them, the drug-resistant ones have been recently increasing in number, causing damage in accommodation facilities and homes.

Generally, examples of methods commonly applied to exterminate bed bugs includes disinfestation performed by a professional exterminator using a powerful agent, disinfestation of treating furniture infested with bed bugs by using steam, etc. However, these methods require great efforts.

Cockroaches also cause damage as unpleasant pests in homes and restaurants. Cockroach control has been a long-standing issue in order to realize more comfortable eating, drinking, and home environments.

Legs of ambulatory pests such as bed bugs and cockroaches have sharp tips that come into point contact with the crawling surface. Thus, it is rare that the legs are caught by normal adhesive floor surfaces, and it is difficult to trap them by the adhesion to the follow surfaces.

In view of this, there has been proposed trapping devices that trap the backs instead of the legs by adhesion. For example, for bed bugs, a method has been proposed in which a tapered space is provided, and the ceiling surface is made adhesive, and the backs of the bed bugs are adhered as they move further into a narrower space (for example, see Patent Document 1). Similarly, as an example of design for adhesion of the backs of cockroaches, a cockroach trapping tool has been proposed in which the ceiling surface of the tapered space is made adhesive (for example, see Patent Document 2).

CITATION LIST

PATENT DOCUMENTS

PATENT DOCUMENT1: International Publication No. WO 2018/0077917
PATENT DOCUMENT 2: Japanese Unexamined Patent Publication No. 2006-136296

SUMMARY OF THE INVENTION

TECHNICAL PROBLEM

Although the method of trapping the backs instead of the legs of ambulatory pests is effective, there is a problem that the trapping efficiency per unit area is limited only by the adhesion of the backs as a trapping device provided in a limited space.

Therefore, the present invention has been made in view of the above-described problem, and an object of the present invention is to provide an ambulatory pest trapping device capable of efficiently trapping ambulatory pests.

SOLUTION TO THE PROBLEM

The present inventors have conducted intensive studies to solve the above-described problem and have completed the present invention. Specifically, the present invention provides the following suitable aspects.

[1] An ambulatory pest trapping device including: an upper sheet on which an ambulatory pest is capable of crawling; a lower sheet which is provided to face the upper sheet and on which the ambulatory pest is capable of crawling; and a corrugated intermediate sheet which is provided between the upper sheet and the lower sheet and with which the ambulatory pest is capable of coming into contact, a space being provided, the space having a tapered shape as a tapered portion of the corrugated intermediate sheet and in which the ambulatory pest is captured, an entrance through which the ambulatory pest is capable of entering into the space being provided between an end of the upper sheet and an end of the lower sheet, at least one selected from the group consisting of the upper sheet, the lower sheet, and the corrugated intermediate sheet being an adhesive sheet which comes into contact with the ambulatory pest.

[2] The ambulatory pest trapping device of [1], wherein the corrugated intermediate sheet is the adhesive sheet.

[3] The ambulatory pest trapping device of [1], wherein the upper sheet and the lower sheet are each the adhesive sheet.

[4] The ambulatory pest trapping device of any one of [1] to [3], wherein a passage prevention portion for sealing part of the entrance is provided.

[5] The ambulatory pest trapping device of any one of [1] to [4], wherein in the space, when an elevation angle formed by a face of the lower sheet and a face of the corrugated intermediate sheet is θ or a depression angle formed by a face of the upper sheet and the face of the corrugated intermediate sheet is θ, a value of tan θ satisfies $0.01 \leq \tan \theta \leq 1.0$.

[6] The ambulatory pest trapping device of any one of [1] to [5], wherein the adhesive sheet has an adhesive surface having, as an adhesive strength, a ball number of 7 or more, the ball number being measured by inclined ball tack test (angle of inclination: 30°) defined in JIS Z 0237.

[7] The ambulatory pest trapping device of any one of [1] to [6], wherein a separation distance between an end of the upper sheet and an end of the lower sheet is 1 mm to 15 mm.

[8] The ambulatory pest trapping device of any one of [1] to [7], wherein an attaching adhesive sheet is provided on a surface of the upper sheet or the lower sheet opposite to the adhesive sheet.

[9] The ambulatory pest trapping device of any one of [1] to [8], wherein at least one sheet selected from the group consisting of the upper sheet, the lower sheet, and the corrugated intermediate sheet contains an attractant for the ambulatory pest.

[10] The ambulatory pest trapping device of any one of [1] to [9], comprising a plurality of ambulatory pest trapping devices, the plurality of ambulatory pest trapping devices being superimposed.

[11] The ambulatory pest trapping device of any one of [1] to [10], wherein the ambulatory pest is a bed bug.

[12] The ambulatory pest trapping device of any one of [1] to [10], wherein the ambulatory pest is a cockroach.

ADVANTAGES OF THE INVENTION

According to the present invention, ambulatory pests can be reliably and efficiently trapped in a space having a double-sided adhesive sheet.

BRIEF DESCRIPTION OF THE DRAWINGS

FIG. 1 is a perspective view of an ambulatory pest trapping device according to a first embodiment of the present invention.

FIG. 2 is an enlarged front view of the ambulatory pest trapping device according to the first embodiment of the present invention.

FIG. 3 is a front view of the ambulatory pest trapping device according to the first embodiment of the present invention.

FIG. 4 is a perspective view of the ambulatory pest trapping device according to the first embodiment of the present invention.

FIG. 5 is a diagram for explaining a method for producing the ambulatory pest trapping device according to the first embodiment of the present invention.

FIG. 6 is another diagram for explaining the method for producing the ambulatory pest trapping device according to the first embodiment of the present invention.

FIG. 7 is an enlarged front view of the ambulatory pest trapping device according to a second embodiment of the present invention.

FIG. 8 is a front view of the ambulatory pest trapping device according to the second embodiment of the present invention.

FIG. 9 is a perspective view of an ambulatory pest trapping device according to a variation of the present invention.

FIG. 10 is a perspective view of an ambulatory pest trapping device according to a variation of the present invention.

FIG. 11 is another perspective view of the ambulatory pest trapping device according to the variation of the present invention.

FIG. 12 is an enlarged front view of the ambulatory pest trapping device according to the variation of the present invention.
FIG. 13 is an enlarged front view of the ambulatory pest trapping device according to the variation of the present invention.
FIG. 14 is an enlarged front view of an ambulatory pest trapping device of Comparative Example 1.
FIG. 15 is a diagram for explaining a method of evaluating a trapping rate for ambulatory pests.

DESCRIPTION OF EMBODIMENT

Embodiments of the present invention will be described in detail below, with reference to the drawings. Note that the present invention is not limited to the embodiments below.

(First Embodiment)

In the present invention, ambulatory pests are pests that move by crawling and creeping among pests such as unpleasant pests that cause discomfort although they have little direct influence on the human body, such as sanitary pests that cause harm to human and animals by biting or stinging their bodies. Ambulatory pests also include species that are flying pests capable of moving by crawling.
Examples of the sanitary pests and the unpleasant pests include bed bugs, ants, cockroaches, mites, centipedes, millipedes, and spiders.

<Ambulatory Pest Trapping Device>

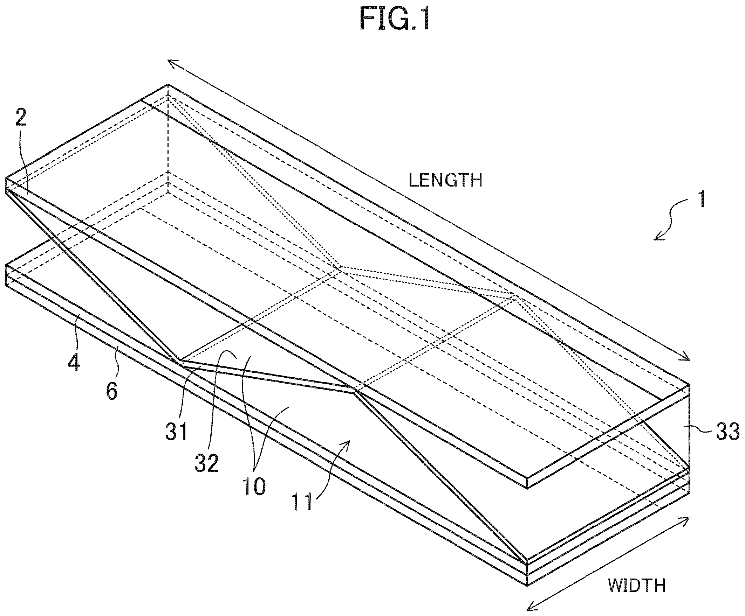

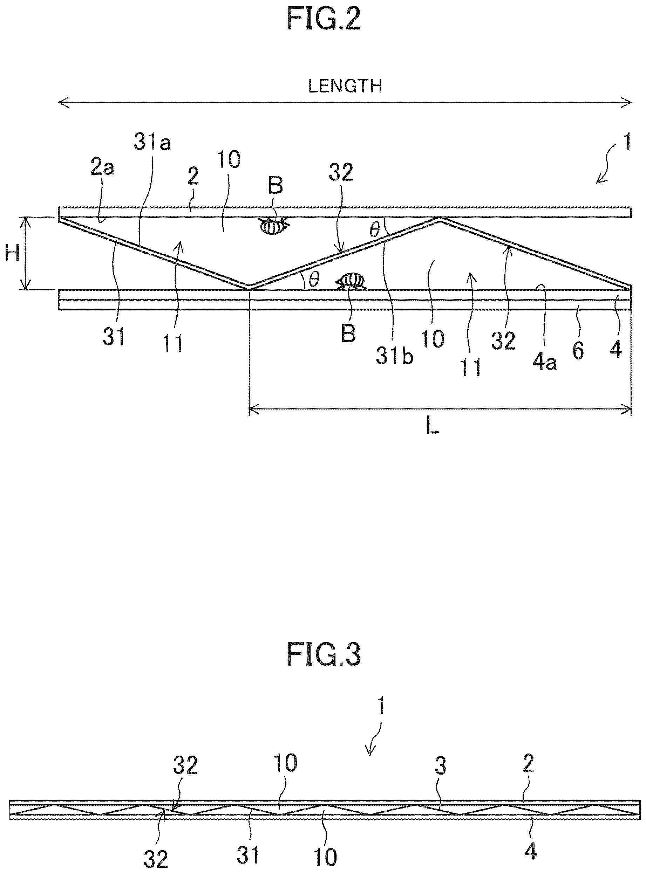

FIG. 1 is a perspective view of an ambulatory pest trapping device according to the first embodiment of the present invention. FIG. 2 is an enlarged front view of the ambulatory pest trapping device according to the first embodiment of the present invention. FIG. 3 is a front view of the ambulatory pest trapping device according to the first embodiment of the present invention.
An ambulatory pest trapping device 1 according to the present embodiment is a tape-like device including an upper sheet 2 on which ambulatory pests B are capable of crawling, a lower sheet 4 which is provided to face the upper sheet 2 and on which the ambulatory pests B are capable of crawling, and a corrugated double-sided adhesive sheet 32 provided between the upper sheet 2 and the lower sheet 4 and with which the ambulatory pests B are capable of coming into contact.
As illustrated in FIGS. 1, 2, and 3, in the ambulatory pest trapping device 1 according to this embodiment, the corrugated intermediate sheet 31 is provided between the upper sheet 2 and the lower sheet 4 to face them, and the upper sheet 2 and the lower sheet 4 are arranged so as to be separated from each other via the corrugated intermediate sheet 31.
As illustrated in FIGS. 2 and 3, in the corrugated intermediate sheet 31 provided between the upper sheet 2 and the lower sheet 4, the respective double-sided adhesive sheets 32 are adhered to the upper surface 31a and the lower surface 31b of the intermediate sheet 31, and the upper surface 31a of the intermediate sheet 31 on which the double-sided adhesive sheet 32 has been adhered is provided to face the upper sheet 2, and the lower surface 31b of the intermediate sheet 31 on which the double-sided adhesive sheet 32 has been adhered is provided to face the lower sheet 4.
In the ambulatory pest trapping device 1 according to this embodiment, the corrugated double-sided adhesive sheet 32 with which ambulatory pests B are capable of coming into contact is provided between the upper sheet 2 and the lower sheet 4, a space 10 which has a tapered shape as a tapered portion of the double-sided adhesive sheets 32 and in which the ambulatory pests B are trapped is formed, and an entrance 11 through which the ambulatory pests B are capable of entering into the space 10 is formed between an end 2a of the upper sheet 2 and an end 4a of the lower sheet 4.
With such a configuration, in the space 10 which has a tapered shape as a tapered portion of the intermediate sheet 31 to which the double-sided adhesive sheets 32 have been adhered and in which the ambulatory pests B are captured, the ceiling can be made adhesive to trap the backs of the ambulatory pests B by adhesion, and the floor surface can be made adhesive to trap the abdomens of the ambulatory pests B by adhesion.
More specifically, the ambulatory pests B such as spider mites enter into the space 10, which is a dark place, through the entrance 11, and while they crawl on the lower sheet 4 or on the upper sheet 2 upside down, the heads or backs thereof come into contact with the double-sided adhesive sheets 32 forming the tapered portion in the space 10. Thus, the ambulatory pests B can be reliably trapped.
When the ambulatory pests B crawl on the surface of the double-sided adhesive sheets 32, they are not trapped by adhesion by itself, but as they move further into a narrower space in the tapered portion, the abdomens thereof come into contact with the double-sided adhesive sheets 32, thereby reliably trapping the ambulatory pests B.

Unlike Comparative Example 1 to be described later, it is not necessary to provide a partitioning member (cushion material) having a certain width between the upper sheet 2 and the lower sheet 4. Thus, the entrance 11 is widened, the ambulatory pests B easily enter the space 10, and the capacity of the space 10 increases. As a result, the ambulatory pests B can be reliably and efficiently trapped.

In the ambulatory pest trapping device 1 according to the present embodiment, as illustrated in FIG. 2, in the space 10, when the elevation angle formed by the face of the lower sheet 4 and the face of the intermediate sheet 31 is θ (or when the depression angle formed by the face of the upper sheet 2 and the face of the intermediate sheet 31 is θ), the following formula is preferably satisfied.

[Math 1]

$$0.01 \leq \tan \theta \leq 1.0 \ (1)$$

In other words, in view of ensuring a gap into which the ambulatory pests B enter, tan θ in the formula (1) is preferably 0.01 or more. Further, since the effect of trapping the backs of the ambulatory pests B becomes low when the inclination of the tapered portion is too steep, tan θ is preferably 1.0 or less. The lower limit of tan θ in the formula (1) is more preferably 0.20 or more, yet more preferably 0.30 or more, particularly preferably 0.35 or more. The upper limit of tan θ in the formula (1) is more preferably 0.80 or less, yet more preferably 0.60 or less, particularly preferably 0.50 or less.

Each size of the ambulatory pest trapping device 1 is not particularly limited, and can be set appropriately according to the intended use.

When the ambulatory pest trapping device 1 is used to eliminate bed bugs at home or in a facility, considering the size of the bed bugs (body length: 5 mm to 8 mm, body height: 1 mm to 2 mm), the length of the ambulatory pest trapping device 1 may be 10 cm to 20 cm, the width is 5 cm to 10 cm, the height of the space 10 having a tapered shape (i.e., separation distance between the end 2a of the upper sheet 2 and the end 4a of the lower sheet 4) H may be 3 mm to 5 mm, the pitch (the length of the bottom of the space 10) L of the intermediate sheet 31 (or the double-sided adhesive sheets 32) in the length direction of the ambulatory pest trapping device 1 may be 10 mm to 50 mm.

In order to eliminate bed bugs in the whole room, for example, the ambulatory pest trapping devices 1 which are continuous in the length direction may be adhered and fixed on the baseboards between the floor surfaces and the walls throughout the room to improve the trapping efficiency. Further, in order to improve the trapping efficiency, the ambulatory pest trapping devices 1 may be superimposed in the thickness direction to increase the adhesive trapping surface per unit area and further increase the trapping capacity.

In order to eliminate cockroaches at home or in a facility, the length of the ambulatory pest trapping device 1 may be 10 cm to 20 cm, the width may be 5 cm to 10 cm, the height H of the space 10 may be 5 mm to 8 mm, and the pitch L of the intermediate sheet 31 may be 10 mm to 50 mm considering the size of the cockroaches (body length: 5 mm to 30 mm, body height: 1 mm to 5 mm). In such a case, a removable adhesive sheet may be attached to either one of the outer surfaces of the ambulatory pest trapping device 1, which may be then adhered and fixed to the floor surface near the boundary between the floor surface and the wall. Further, in order to further improve the trapping efficiency, the ambulatory pest trapping devices 1 may be superimposed in the thickness direction to increase the adhesive trapping surface per unit area and further increase the trapping capacity.

The height H of the space 10 having a tapered shape is preferably 1 mm to 15 mm.

<Upper Sheet, Lower Sheet, and Intermediate Sheet>

The upper sheet 2 and the lower sheet 4 evenly hold the corrugated intermediate sheet 31 via the double-sided adhesive sheets 32 to impart strength to the intermediate sheet 31 such that the intermediate sheet 31 can be handled as a sheet while providing the floor surface on which the ambulatory pests B are capable of crawling. The upper sheet 2 and the lower sheet 4 suitably have moderate irregularities that facilitate scrawling of the ambulatory pests B, rather than having a smooth surface, and preferably have, for example, a roughness equal to or rougher than P600 according to ISO 6344-3. Examples of the material for forming the upper sheet 2 and the lower sheet 4 include films made of cellulose-based paper and thermoplastic resins such as polyester resin, polyamide resin, polyvinyl chloride resin, polyolefin resin, acrylic resin.

The upper sheet 2 and the lower sheet 4 used are flexible and thin, have good adhering properties with the double-sided adhesive sheets 32, have endurance to the double-sided adhesive sheets 32, and have good dimensional stability. The upper sheet 2 and the lower sheet 4 may have light-shielding properties or light transparency. When the ambulatory pest trapping device 1 is placed outdoors, the upper sheet 2 and the lower sheet 4 used are preferably water resistant or weather resistant.

Examples of the sheet having light-shielding properties may include a sheet of paper, polylaminated paper, and a film which are colored in black or any other medium-dark color.

As a light-transparent sheet, a transparent film including thermoplastic resin such as polyester resin, polyamide resin, polyvinyl chloride resin, polyolefin resin, or acrylic resin may be used.

When the ambulatory pests are spider mites having a habit of preferring dark places, the upper sheet 2 having light-shielding properties makes it possible to trap more efficiently the ambulatory pests by using the habit. On the other hand, when the upper sheet 2 is light-transparent, trapped ambulatory pests may be easily visible from the outside of the device.

The intermediate sheet 31 is configured such that the double-sided adhesive sheet 32 is adhered thereto and configured to have a tapered portion for forming the space 10 in which the ambulatory pests B are captured. The material for forming the intermediate sheet 31 can be the same as the materials for forming the upper sheet 2 and the lower sheet 4.

The ambulatory pest trapping device 1 according to the present embodiment is disposed after trapping the ambulatory pests. Thus, in view of environmental friendliness, the materials for forming the upper sheet 2, the lower sheet 4, and the intermediate sheet 31 are preferably paper or carbon-neutral bioplastics or biodegradable plastics.

Examples of the bioplastics include polyethylene terephthalate, polyethylene, polypropylene, polyamide, and polytetraethylene terephthalate, which are derived from biomass. Examples of the biodegradable plastics include polylactic acid, polyhydroxyalkanoic acid, polybutylene succinate, polyethylene succinate, polyethylene succinate adipate, polybutylene adipate terephthalate, polycaprolactone, and polyglycolic acid.

<Double-Sided Adhesive Sheet>

The double-sided adhesive sheet 32 is, as illustrated in FIG. 2, configured to come into contact with ambulatory pests B and traps the ambulatory pests B by its adhesive surface. The double-sided adhesive sheet 32 is not particularly limited as long as having appropriate adhesiveness for trapping the ambulatory pests B. The double-sided adhesive sheet 32 may be made of an acrylic, rubber-based, SIS block-based, silicon-based, or urethan-based adhesive agent. Note that these adhesive agents may be used alone or in combination of two or more of them.

The double-sided adhesive sheet 32 includes a sheet-like substrate and adhesives applied on both sides of the substrate, and the substrate sandwiched between the adhesives is not particularly limited, and a thin sheet-like substrate such as paper and films can be used.

In view of reliably trap the ambulatory pests B, the double-sided adhesive sheet 32 has a high adhesive strength and preferably has a ball number of 7 or more measured by the inclined ball tack test (angle of inclination: 30°) defined in JIS Z 0237. The double-sided adhesive sheet 32 is preferably a permanently bonding adhesive sheet that bonds a target to be adhered semi-permanently once the adhesive sheet is adhered to the target. A removable adhesive sheet that is to be peeled off after adhering for a certain period of time has relatively worse adhesiveness and may thus be not preferably used. The ball number is more preferably 9 or more.

<Attractant>

The double-sided adhesive sheet 32 may contain an attractant for ambulatory pests B to be trapped. The attractant attracts ambulatory pests B and easily guides them into the space 10. The attractant is not particularly limited as long as it has an effect of attracting ambulatory pests. In the case in which the ambulatory pests to be attracted are bed bugs, the attractant can be selected from the group consisting of octenal, hexenal, hexanone, lactic acid, dimethyldisulfide, and dimethyltrisulfide, which are known as attractants for bed bugs. In the case in which the ambulatory pests to be attracted are cockroaches, the attractant can be selected from the group consisting of an attractant made of at least one selected from protein, hydrocarbon, or lipid, a biological substance derived from insects as bait, fatty acid ester, saturated or unsaturated alcohol, non-reducing starch hydrolysate, and aromatic fatty acid ketone, alcohol, aldehyde, lactone, and ester, which are known as attracting substances. Alternatively, a separately prepared compound pellet containing an attractant may be put into the space 10 in advance.

When the upper sheet 2, the lower sheet 4, and the intermediate sheet 31 are made of resin, the attractant may be kneaded into the resin. In this case, the attractant is gradually released from the inside of the resin molded body, advantageously resulting in a longer lasting effect compared with surface-coated attractants.

<Attaching Adhesive Sheet>

As illustrated in FIG. 2, the ambulatory pest trapping device 1 according to this embodiment includes an attaching adhesive sheet 6 on a surface of the lower sheet 4 that is opposite to the double-sided adhesive sheet 32. Therefore, the ambulatory pest trapping device 1 may be easily attached to the wall surface to which the ambulatory pest trapping device 1 is adhered, for example, in a case in which the ambulatory pest trapping device 1 is set upright along the wall and attached thereto. The attaching adhesive sheet 6 may be provided on the surface of the upper sheet 2 opposite to the double-sided adhesive sheet 32.

The attaching adhesive sheet 6 may also be used to stack the ambulatory pest trapping device 1 on another ambulatory pest trapping device 1 and integrate them.

In addition, the attaching adhesive sheet 6 may be made of at least one adhesive agent such as an acrylic-based adhesive agent that is easily removable. Note that these adhesive agents may be used alone or in combination of two or more of them.

<Passage Prevention Portion>

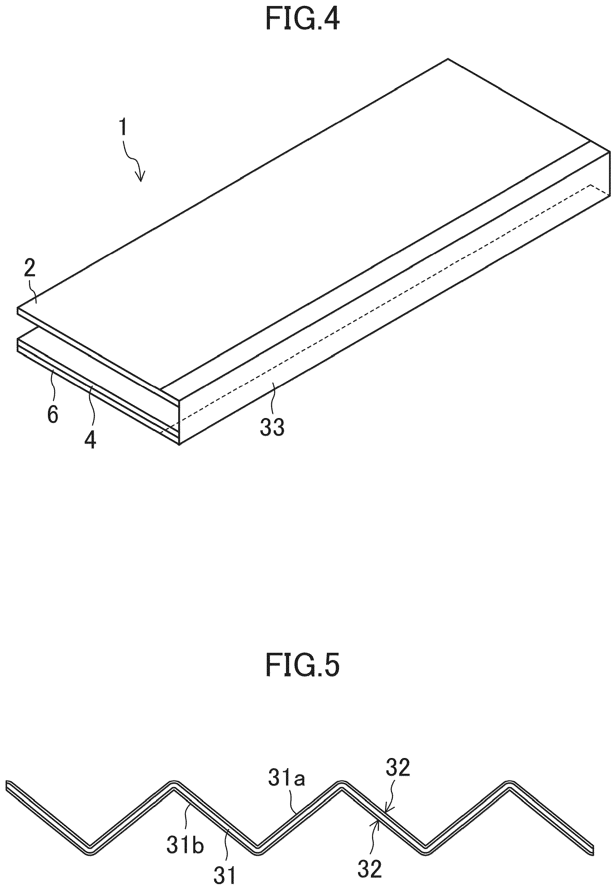

As illustrated in FIGS. 1 and 4, the ambulatory pest trapping device 1 according to this embodiment is provided with passage prevention portion 33 which seals part of the entrance 11.

With such a configuration, the passage prevention portion 33 serves as an obstacle for ambulatory pests B trying to pass through the space 10 by crawling. Thus, in the space 10, the crawling behavior of the ambulatory pests B can be temporarily stopped, and the ambulatory pests B trying to return to the entrance 11 easily come into contact with the adhesive sheet 32 forming a tapered portion in the space 10. As a result, the efficiency of trapping the ambulatory pests B is improved.

When the passage prevention portion 33 is made of resin, the attractant may be kneaded into the resin.

(Method for Producing Ambulatory Pest Trapping Device)

Next, an example of a method for producing the ambulatory pest trapping device 1 of this embodiment will be described.

As illustrated in FIG. 5, the double-sided adhesive sheets 32 are adhered to the upper surface 31a and the lower surface 3 1b of the intermediate sheet 31. Then, the intermediate sheet 31 with the double-sided adhesive sheets 32 adhered thereto is folded into a corrugated shape.

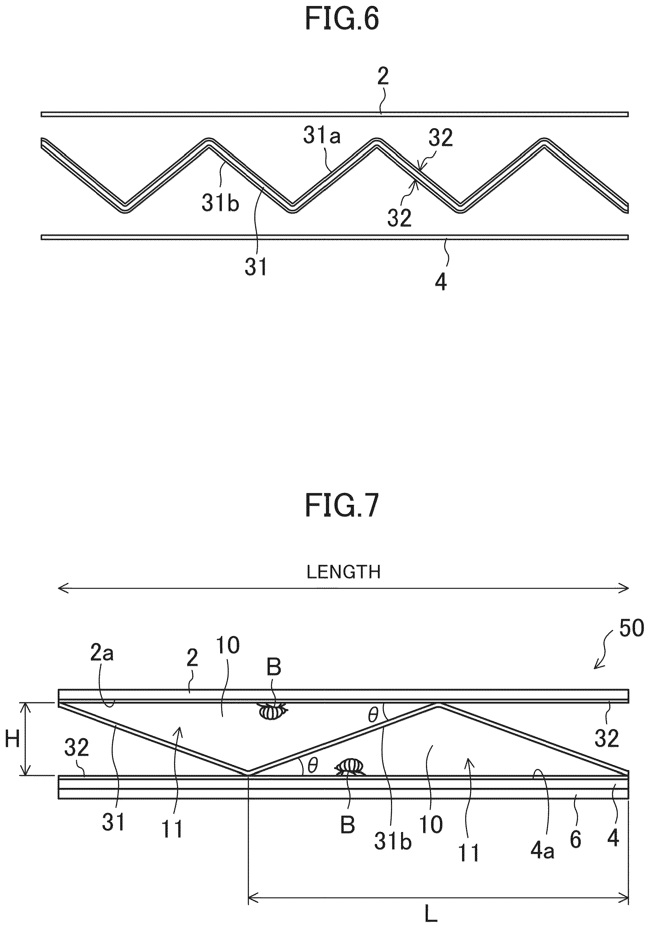

Then, as illustrated in FIG. 6, an upper sheet 2 and a lower sheet 4 are arranged to face each other, and the corrugated intermediate sheet 31 illustrated in FIG. 5 is interposed between the upper sheet 2 and the lower sheet 4.

Subsequently, the upper sheet 2 and the lower sheet 4 are pressed against the intermediate sheet 31 to bring parts of the intermediate sheet 31 (i.e., parts of the adhesive sheets 32) into contact with the upper sheet 2 and the lower sheet 4, so that the upper sheet 2 and the lower sheet 4 sandwich the intermediate sheet 31 with the double-sided adhesive sheets 32 adhered thereto, and the intermediate sheet 31 is fixed to the upper sheet 2 and the lower sheet 4.

A passage prevention portion 33 is then provided for part of the entrance 11 to seal part of the entrance 11, thereby producing the ambulatory pest trapping device 1 of FIGS. 1 to 4.

A plurality of (for example, two) ambulatory pest trapping devices 1 may be superimposed on each other. With such a configuration, the ambulatory pests B more easily come into contact with the double-sided adhesive sheet 32 forming a tapered portion in the space 10, thereby further improving the efficiency of trapping the ambulatory pests B.

Further, in view of improving productivity, one obtained by forming a sheet having structures of the ambulatory pest trapping device 1 shown in FIGS. 1 to 4 continuous to each other and is then processing the sheet to have a predetermined width and a predetermined length may be used as the ambulatory pest trapping device 1.

(Second Embodiment)

Next, the second embodiment of the present invention will be described. The same components as those of the first embodiment are denoted by the same reference numerals, and the description thereof will be omitted.

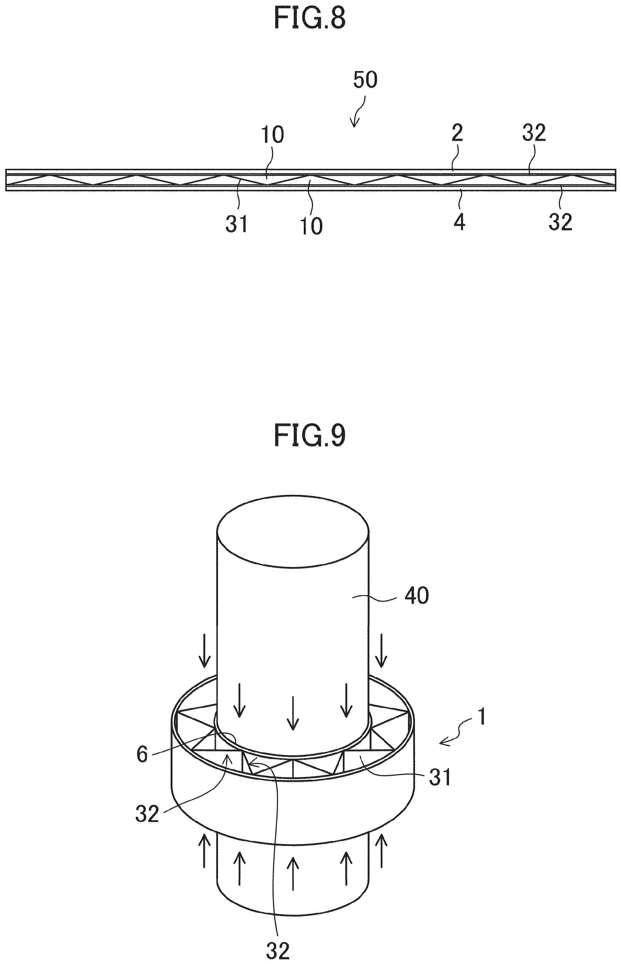

FIG. 7 is an enlarged front view of the ambulatory pest trapping device according to the second embodiment of the present invention. FIG. 8 is a front view of the ambulatory pest trapping device according to the second embodiment of the present invention.

As illustrated in FIGS. 7 and 8, the ambulatory pest trapping device 50 according to this embodiment is characterized in that the double-sided adhesive sheets 32 with which the ambulatory pests B are capable of coming into contact are adhered not to the corrugated intermediate sheet 31, but to the end 2a of the upper sheet 2 and the end 4a of the lower sheet 4.

In other words, the ambulatory pest trapping device 50 according to this embodiment includes an upper sheet 2, a lower sheet 4, and double-sided adhesive sheets 32 with which the ambulatory pests B are capable of coming into contact. The ambulatory pest trapping device 50 is provided with a space 10 which has a tapered shape as a tapered portion of the corrugated intermediate sheet 31 and in which the ambulatory pests B are captured and an entrance 11 through which the ambulatory pest B is capable of entering into the space 10 between an end 2a of the upper sheet 2 and an end 4a of the lower sheet 4.

With such a configuration, as in the first embodiment, in the space 10 in which the ambulatory pests B are captured, the ceiling is made adhesive by the upper sheet 2 and the lower sheet 4 to which the double-sided adhesive sheets 32 have been adhered, to trap the backs of the ambulatory pests B by adhesion, and the floor surface is made adhesive to trap the abdomens of the ambulatory pests B by adhesion.

More specifically, when the ambulatory pests B such as spider mites enter the space 10, which is a dark place, from the entrance 11 and move further into a narrower space in the tapered portion while crawling on the double-sided adhesive sheets 32, the abdomens thereof come into contact with the double-sided adhesive sheets 32, thereby reliably trapping the ambulatory pests B.

When the ambulatory pests B crawl on the surfaces of the intermediate sheet 31, they are not trapped by adhesion by itself, but as they move further into a narrower space in the tapered portion, the heads or backs thereof come into contact with the double-sided adhesive sheets 32, thereby reliably trapping the ambulatory pests B.

As in the first embodiment described above, it is not necessary to provide a partitioning member having a certain width between the upper sheet 2 and the lower sheet 4. Thus, the entrance 11 is widened, the ambulatory pests B easily enter the space 10, and the capacity of the space 10 increases. As a result, the ambulatory pests B can be reliably and efficiently trapped.

Next, an example of a method for producing the ambulatory pest trapping device 50 of this embodiment will be described.

First, as in the case of FIG. 5, an intermediate sheet 31 is folded into a corrugated shape, and double-sided adhesive sheets 32 are adhered to the end 4a of an upper sheet 2 and the end 2a of a lower sheet 4.

Then, as in the case of FIG. 6, the upper sheet 2 and the lower sheet 4 to each of which the double-sided adhesive sheet 32 has been adhered are arranged to face each other, and the corrugated intermediate sheet 31 intervenes between the upper sheet 2 and the lower sheet 4.

Subsequently, the upper sheet 2 and the lower sheet 4 are pressed against the intermediate sheet 31 to bring parts of the intermediate sheet 31 into contact with the upper sheet 2 and the lower sheet 4, so that the upper sheet 2 and the lower sheet 4 to which the double-sided adhesive sheets 32 have been adhered sandwich the intermediate sheet 31, and the intermediate sheet 31 is fixed to the upper sheet 2 and the lower sheet 4.

A passage prevention portion 33 is then provided for part of the entrance 11 to seal part of the entrance 11, thereby producing an ambulatory pest trapping device 50 of FIGS. 7 and 8.

Also in the present embodiment, a plurality of (for example, two) ambulatory pest trapping devices 50 may be superimposed on each other. With such a configuration, the ambulatory pests B more easily come into contact with the double-sided adhesive sheets 32 in the space 10, thereby further improving the efficiency of trapping the ambulatory pests B.

The embodiments may be modified as described below.

For example, as illustrated in FIG. 9, the ambulatory pest trapping device 1 may be attached and fixed around a leg 40 of a bed via an attaching adhesive sheet 6. With such a configuration, the efficiency of trapping the ambulatory pests B around the bed can be improved.

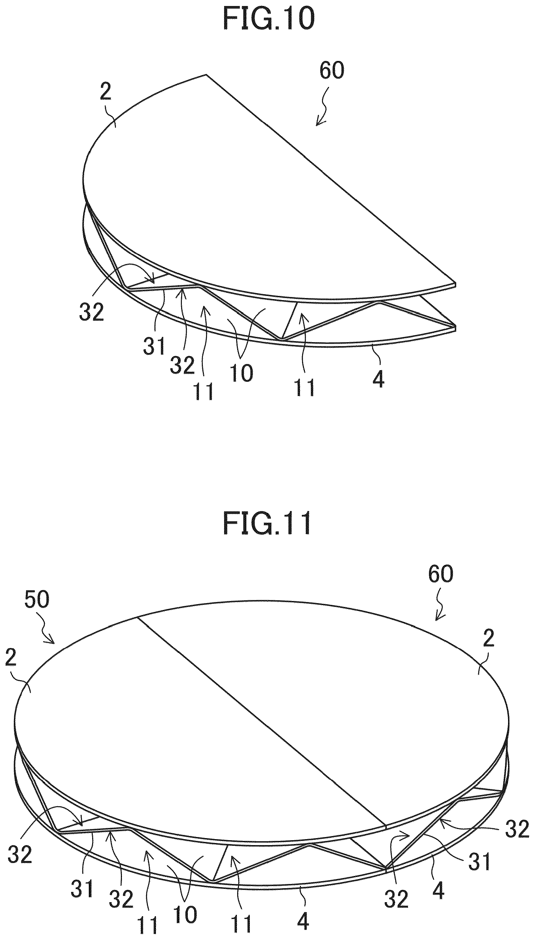

As illustrated in FIG. 10, the shape of the ambulatory pest trapping device 60 may be made generally semicircular in plan view, and two ambulatory pest trapping devices 60 may be adhered to each other as shown in FIG. 11. With such a configuration, the space 10 and the entrance 11 can be provided in all directions (360°), and therefore, it is possible to cope with entering of the ambulatory pests B from all directions.

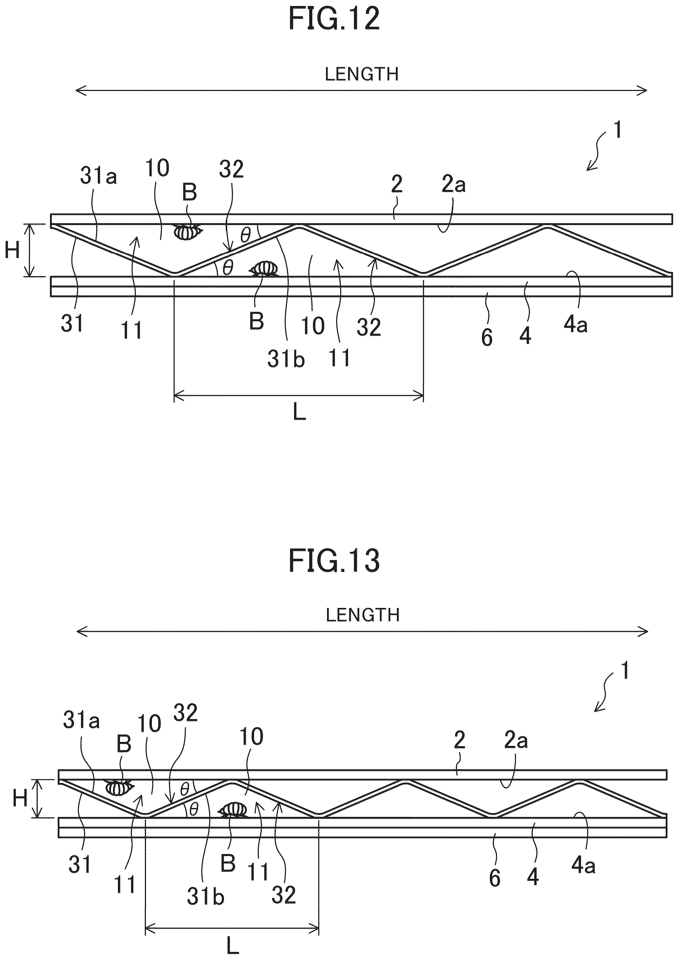

Further, as illustrated in FIGS. 12 and 13, as mentioned above, the height of the space 10 having a tapered shape and the pitch L of the intermediate sheet 31 in the ambulatory pest trapping device 1 may be changed according to the size of the ambulatory pests B. With such a configuration, the size of the ambulatory pest trapping device 1 can be optimized for trapping the target ambulatory pests B, thereby improving the efficiency of trapping the target ambulatory pests B.

The ambulatory pest trapping devices 1 having different heights L and different pitches L may be superimposed in the thickness direction. With such a configuration, the trapping capacity for trapping various kinds of ambulatory pests B can be improved.

Examples

(Ball Tack Test)

The adhesive strength of the adhesive surface of the double-sided pressure-sensitive adhesive sheet was evaluated by a ball tack test (inclination angle: 30°) in accordance with JIS Z 0237. More specifically, first, under an environment of a temperature of 26°C and a relative humidity of 65%, paper to which the same double-sided pressure-sensitive adhesive sheet as used in the produced ambulatory pest trapping device has been attached was adhered and fixed to an inclined table having an inclination angle of 30°.

Then, a stainless steel ball is rolled onto the adhesive surface of the adhesive sheet in accordance with the method described in JIS Z 0237. Then, the number of the ball with the largest diameter among the balls stopping on the adhesive surface was determined as a ball number. In one double-sided adhesive sheet, the ball number on each adhesive surface was measured, and the lower number value was used as the ball number of the double-sided adhesive sheet.

Note that the adhesive surface having a ball number of less than 7 cannot trap ambulatory pest.

(Evaluation of Trapping Rate)

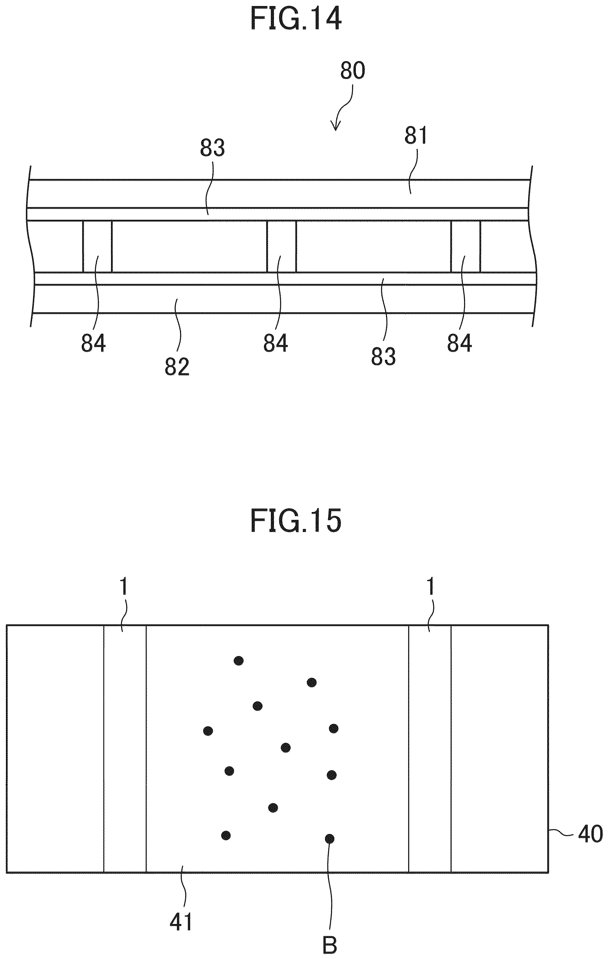

As illustrated in FIG. 15, filter paper 41 was laid on the bottom of a plastic container 40, the ambulatory pest trapping device 1 was placed on each side, ambulatory pests B were released to the center portion, and a cycle of 12 hours under indoor light and 12 hours of light-off was repeated twice. Then, after 48 hours, the ambulatory pest trapping devices 1 were disassembled, the number of the ambulatory pests B trapped by the adhesive portions was counted and defined as N1, the number of the ambulatory pests B not trapped by the adhesive portions in the plastic container 40 and the ambulatory pest trapping devices 1 was counted and defined as N2, and the trapping rate was calculated using the following equation (2). The process was performed a total of three times, and the average value of the trapping rates was determined.

[Math 2]

$$\text{Trapping rate (\%)} = \{N1/(N1 + N2)\} \times 100 \quad (2)$$

(Production of Ambulatory Pest Trapping Device)

(Example 1)

Two sheets of commercially available black paper board (thickness: 0.45 mm) were cut into 3 cm × 20 cm to obtain an upper sheet and a lower sheet. A commercially available black cardboard (thickness: 0.18 mm) as an intermediate sheet was cut into 3 cm × 22 cm, and a double-sided adhesive tape (manufactured by KIKUSUI TAPE, trade name: KIKUDOUBLE 2020, ball number: 9) was adhered to both surfaces thereof. The sheet was then repeatedly folded into a mountain/valley shape at 11 mm intervals to form corrugated folds.

Then, release paper of the double-sided adhesive tape adhered to the corrugated intermediate sheet was peeled off, the upper sheet and the lower sheet were arranged so as to face each other, and the intermediate sheet (or the double-sided adhesive tape) intervened between the upper sheet and the lower sheet so that the pitch L of the intermediate sheet was 20 mm and the height H of the space was 4 mm. Subsequently, the upper sheet and the lower sheet were pressed against the intermediate sheet to bring parts of the intermediate sheet (i.e., parts of the double-sided adhesive sheet) into contact with the upper sheet and the lower sheet, so that the intermediate sheet to which the double-sided adhesive tapes had been adhered was fixed to the upper sheet and the lower sheet.

Then, one end of each entrance was closed with a black paper tape (manufactured by KAMOI KAKOSHI Co., LTD., trade name: mt1P Mat Black) to form a passage prevention portion, and granular resin pellets (about 0.02 g/pellet) containing a 0.01% 50/50 mixture of hexenal and octenal were used as a bed bug attractant, charged one by one from each entrance into the space, and adhered to the passage prevention portion, thereby producing an ambulatory pest trapping device.

The elevation angle θ formed by the face of the lower sheet and the face of the intermediate sheet and the depression angle θ formed by the face of the upper sheet and the face of the intermediate sheet were 22°, and tan θ = 0.40.

The trapping rate for bed bugs was evaluated using the produced ambulatory pest trapping device. The average trapping rate was 81%.

(Example 2)

An ambulatory pest trapping device was produced in the same manner as in Example 1 except that the pitch L of the intermediate sheet (or the double-sided adhesive tape) was changed to 30 mm and the height H of the space was changed to 6 mm.

The trapping rate for bed bugs was evaluated using the produced ambulatory pest trapping device. The average trapping rate was 78%.

(Example 3)

An ambulatory pest trapping device was produced in the same manner as in Example 1 except that the pitch L of the intermediate sheet (or the double-sided adhesive tape) was changed to 40 mm, the height H of the space was changed to 8 mm, and the resin pellets containing a bed bug attractant were changed to resin pellets (0.02 g/pellet) containing 1% vanillin which was a German cockroach attractant.
The trapping rate for German cockroaches was evaluated using the produced ambulatory pest trapping device. The average trapping rate was 83%.

(Example 4)

The ambulatory pest trapping device of Example 1 was stacked on the ambulatory pest trapping device of Example 2 and adhered to each other to form an integral body, and the trapping rate for bed bugs was evaluated. The average trapping rate was 96%.

(Example 5)

An ambulatory pest trapping device was produced in the same manner as in Example 2 except that the resin pellets containing a bed bug attractant were changed to resin pellets (about 0.02g/pellet) containing 1% vanillin which was a German cockroach attractant.
The produced ambulatory pest trapping device was stacked on the ambulatory pest trapping device of Example 3 and adhered to each other to form an integral body, and the trapping rate for German cockroaches was evaluated. The average trapping rate was 95%.

(Example 6)

Two sheets of commercially available black paper board (thickness: 0.45 mm) were cut into 5 cm × 20 cm to obtain an upper sheet and a lower sheet. A commercially available black cardboard (thickness: 0.18 mm) as an intermediate sheet was cut into 5 cm × 23 cm, and a double-sided adhesive tape (manufactured by KIKUSUI TAPE, trade name: KIKUDOUBLE 2020, ball number: 9) was adhered to both surfaces thereof. The sheet was then repeatedly folded into a mountain/valley shape at 23 mm intervals to form corrugated folds.
Then, release paper of the double-sided adhesive tape adhered to the corrugated intermediate sheet was peeled off, the upper sheet and the lower sheet were arranged so as to face each other, and the intermediate sheet (or the double-sided adhesive tape) intervened between the upper sheet and the lower sheet so that the pitch L of the intermediate sheet was 48 mm and the height H of the space was 12 mm. Subsequently, the upper sheet and the lower sheet were pressed against the intermediate sheet to bring parts of the intermediate sheet (i.e., parts of the double-sided adhesive sheet) into contact with the upper sheet and the lower sheet, so that the intermediate sheet to which the double-sided adhesive tapes had been adhered was fixed to the upper sheet and the lower sheet.
Then, one end of each entrance was closed with a black paper tape (manufactured by KAMOI KAKOSHI Co., LTD., trade name: mt1P Mat Black) to form a passage prevention portion, and granular resin pellets (about 0.02g/pellet) containing 1% vanillin were used as a cockroach attractant, charged one by one from each entrance into the space, and adhered to the passage prevention portion, thereby producing an ambulatory pest trapping device.
The elevation angle θ formed by the face of the lower sheet and the face of the intermediate sheet and the depression angle θ formed by the face of the upper sheet and the face of the intermediate sheet were 26°, and tan θ = 0.49.
Two such ambulatory pest trapping devices were prepared, and one of the ambulatory pest trapping devices was stacked on the other ambulatory pest trapping device to form an integral body, and the trapping rate for smokybrown cockroaches was evaluated. The average trapping rate was 88%.

(Example 7)

Two sheets of commercially available black paper board (thickness: 0.45 mm) were cut into 3 cm × 20 cm as an upper sheet and a lower sheet, and a double-sided adhesive tapes (manufactured by KIKUSUI TAPE, trade name: KIKUDOUBLE 2020, ball number: 9) were adhered to one surface of the upper sheet and one surface of the lower sheet. A commercially available black cardboard (thickness: 0.18 mm) as an intermediate sheet was cut into 3 cm × 22 cm, and the sheet was then repeatedly folded into a mountain/valley shape at 11 mm intervals to form corrugated folds.
Then, release paper of the double-sided adhesive tapes adhered to the upper sheet and the lower sheet was peeled off, the upper sheet and the lower sheet were arranged so that the double-sided adhesive tapes of the upper sheet and the lower sheet faced each other, and the intermediate sheet intervened between the upper sheet and the lower sheet so that the pitch L of the intermediate sheet was 30 mm and the height H of the space was 6 mm. Subsequently, the upper sheet and the lower sheet were pressed against the intermediate sheet to bring parts of the intermediate sheet into contact with parts of the double-sided adhesive tapes on the upper sheet and the lower sheet, so that the intermediate sheet was fixed to the upper sheet and the lower sheet by the upper sheet and the lower sheet to which the double-sided adhesive tapes had been adhered.

Then, one end of each entrance was closed with a black paper tape (manufactured by KAMOI KAKOSHI Co., LTD., trade name: mt1P Mat Black) to form a passage prevention portion, and granular resin pellets (about 0.02 g/pellet) containing a 0.01% 50/50 mixture of hexenal and octenal were used as a bed bug attractant, charged one by one from each entrance into the space, and adhered to the passage prevention portion, thereby producing an ambulatory pest trapping device.

The elevation angle $\theta$ formed by the face of the lower sheet and the face of the intermediate sheet and the depression angle $\theta$ formed by the face of the upper sheet and the face of the intermediate sheet were 22°, and tan $\theta$ = 0.40.

The trapping rate for bed bugs was evaluated using the produced ambulatory pest trapping device. The average trapping rate was 68%.

(Example 8)

An ambulatory pest trapping device was produced in the same manner as in Example 7 except that the pitch L of the intermediate sheet was changed to 40 mm, the height H of the space was changed to 8 mm, and the resin pellets containing a bed bug attractant were changed to resin pellets (about 0.02 g/pellet) containing 1% vanillin which was a German cockroach attractant.

The trapping rate for German cockroaches was evaluated using the produced ambulatory pest trapping device. The average trapping rate was 71%.

(Comparative Example 1)

Two sheets of commercially available black paper board (thickness: 0.45 mm) were cut into 3 cm × 20 cm as an upper sheet and a lower sheet, and as illustrated in FIG. 14, double-sided adhesive tapes (manufactured by KIKUSUI TAPE, trade name: KIKUDOUBLE 2020, ball number: 9) 83 were adhered to one surface of the upper sheet 81 and one surface of the lower sheet 82.

Then, release paper of the double-sided adhesive tapes 83 adhered to the upper sheet 81 and the lower sheet 82 was peeled off, the upper sheet 81 and the lower sheet 82 were arranged so that the double-sided adhesive tapes 83 of the upper sheet 81 and the lower sheet 82 faced each other, and a 4 mm × 4 mm × 30 mm prismatic foamed polyethylene cushion material (manufactured by SAKAI CHEMICAL GROUP, trade name: Mina Foam, black 3 mm-thick product) 84 intervened between the upper sheet 81 and the lower sheet 82 at 20 mm intervals. Subsequently, the upper sheet 81 and the lower sheet 82 were pressed against the cushion material 84 to bring parts of the cushion material 84 into contact with parts of the double-sided adhesive tapes 83 on the upper sheet 81 and the lower sheet 82, so that the cushion material 84 was fixed to the upper sheet 81 and the lower sheet 82 by the upper sheet 81 and the lower sheet 82 to which the double-sided adhesive tapes 83 had been adhered.

Then, one end of each entrance was closed with a black paper tape (manufactured by KAMOI KAKOSHI Co., LTD., trade name: mt1P Mat Black) to form a passage prevention portion, and granular resin pellets (about 0.02 g/pellet) containing a 0.01% 50/50 mixture of hexenal and octenal were used as a bed bug attractant, charged one by one from each entrance into the space, and adhered to the passage prevention portion, thereby producing an ambulatory pest trapping device 80 shown in FIG. 14.

The trapping rate for bed bugs was evaluated using the produced ambulatory pest trapping device 80. The average trapping rate was 2%.

[Table 1]

| | Length [cm] | Width [mm] | L [mm] | H [mm] | θ [°] | tan θ | Adhesive portion | Ball number | Passage prevention portion | Attractant | Ambulatory pest | Average trapping rate [%] |
|---|---|---|---|---|---|---|---|---|---|---|---|---|
| Example 1 | 20 | 30 | 20 | 4 | 22 | 0.40 | Intermediate sheet | 9 | Present | Present | Bed bug | 81 |
| Example 2 | 20 | 30 | 30 | 6 | 22 | 0.40 | Intermediate sheet | 9 | Present | Present | Bed bug | 78 |
| Example 3 | 20 | 30 | 40 | 8 | 22 | 0.40 | Intermediate sheet | 9 | Present | Present | German cockroach | 83 |
| Example 4 (Two-layer) | 20 | 30 | 20 | 4 | 22 | 0.40 | Intermediate sheet | 9 | Present | Present | Bed bug | 96 |
| | 20 | 30 | 30 | 6 | 22 | 0.40 | Intermediate sheet | 9 | Present | Present | | |
| Example 5 (Two-layer) | 20 | 30 | 30 | 6 | 22 | 0.40 | Intermediate sheet | 9 | Present | Present | German cockroach | 95 |
| | 20 | 30 | 40 | 8 | 22 | 0.40 | Intermediate sheet | 9 | Present | Present | | |
| Example 6 (Two-layer) | 20 | 50 | 48 | 12 | 26 | 0.50 | Intermediate sheet | 9 | Present | Present | Smokybrown cockroach | 88 |
| | 20 | 50 | 48 | 12 | 26 | 0.50 | Intermediate sheet | 9 | Present | Present | | |
| Example 7 | 20 | 30 | 30 | 6 | 22 | 0.40 | Upper sheet Lower sheet | 9 | Present | Present | Bed bug | 68 |
| Example 8 | 20 | 30 | 40 | 8 | 22 | 0.40 | Upper sheet Lower sheet | 9 | Present | Present | German cockroach | 71 |
| Comparative Example 1 | 20 | 30 | 20 | 4 | No tapered portion | No tapered portion | Upper sheet Lower sheet | 9 | Present | Present | Bed bug | 2 |

INDUSTRIAL APPLICABILITY

As described above, the present invention is particularly useful as an ambulatory pest trapping device for trapping ambulatory pests with an adhesive surface.

DESCRIPTION OF REFERENCE CHARACTERS

| 1 | Ambulatory Pest Trapping Device |
|---|---|
| 2 | Upper Sheet |
| 2a | End of Upper Sheet |
| 4 | Lower Sheet |
| 4a | End of Lower Sheet |
| 6 | Attaching Adhesive Sheet |
| 10 | Space |
| 11 | Entrance |
| 31 | Intermediate Sheet |
| 31a | Upper Surface of Intermediate Sheet |
| 31b | Lower Surface of Intermediate Sheet |
| 32 | Adhesive Sheet |
| 33 | Passage Prevention Portion |
| 40 | Plastic Container |
| 41 | Filter Paper |
| 50 | Ambulatory Pest Trapping Device |
| 60 | Ambulatory Pest Trapping Device |
| B | Ambulatory Pest |
| H | Height of Space (Separation Distance between End of Upper Sheet and End of Lower Sheet) |
| L | Pitch (Length of Bottom of Space) of Intermediate Sheet (or Double-Sided Adhesive Sheet) in Length Direction of Ambulatory Pest Trapping Device. |
| Θ | Elevation Angle formed by Face of Lower Sheet and Face of Intermediate Sheet (or Depression Angle formed by Face of Upper Sheet and Face of Intermediate Sheet) |

## Claims

1. An ambulatory pest trapping device comprising:

   an upper sheet on which an ambulatory pest is capable of crawling;
   a lower sheet which is provided to face the upper sheet and on which the ambulatory pest is capable of crawling; and
   a corrugated intermediate sheet which is provided between the upper sheet and the lower sheet and with which the ambulatory pest is capable of coming into contact,
   a space being provided, the space having a tapered shape as a tapered portion of the corrugated intermediate sheet and in which the ambulatory pest is captured,
   an entrance through which the ambulatory pest is capable of entering into the space being provided between an end of the upper sheet and an end of the lower sheet,
   at least one selected from the group consisting of the upper sheet, the lower sheet, and the corrugated intermediate sheet being an adhesive sheet which comes into contact with the ambulatory pest.

2. The ambulatory pest trapping device of claims 1, wherein the corrugated intermediate sheet is the adhesive sheet.

3. The ambulatory pest trapping device of claim 1, wherein the upper sheet and the lower sheet are each the adhesive sheet.

4. The ambulatory pest trapping device of any one of claims 1 to 3, wherein a passage prevention portion for sealing part of the entrance is provided.

5. The ambulatory pest trapping device of any one of claims 1 to 4, wherein
   in the space, when an elevation angle formed by a face of the lower sheet and a face of the corrugated intermediate sheet is $\theta$ or a depression angle formed by a face of the upper sheet and the face of the corrugated intermediate sheet is $\theta$, a value of tan $\theta$ satisfies $0.01 \leq \tan \Theta < 1.0$.

6. The ambulatory pest trapping device of any one of claims 1 to 5, wherein
   the adhesive sheet has an adhesive surface having, as an adhesive strength, a ball number of 7 or more, the ball number being measured by inclined ball tack test (angle of inclination: 30°) defined in JIS Z 0237.

7. The ambulatory pest trapping device of any one of claims 1 to 6, wherein
   a separation distance between an end of the upper sheet and an end of the lower sheet is 1 mm to 15 mm.

8. The ambulatory pest trapping device of any one of claims 1 to 7, wherein
   an attaching adhesive sheet is provided on a surface of the upper sheet or the lower sheet opposite to the adhesive sheet.

9. The ambulatory pest trapping device of any one of claims 1 to 8, wherein
   at least one sheet selected from the group consisting of the upper sheet, the lower sheet, and the corrugated intermediate sheet contains an attractant for the ambulatory pest.

10. The ambulatory pest trapping device of any one of claims 1 to 9, comprising a plurality of ambulatory pest trapping devices, the plurality of ambulatory pest trapping devices being superimposed.

11. The ambulatory pest trapping device of any one of claims 1 to 10, wherein
    the ambulatory pest is a bed bug.

12. The ambulatory pest trapping device of any one of claims 1 to 10, wherein
    the ambulatory pest is a cockroach.

FIG.1

EP 4 458 148 A1

# FIG.2

LENGTH

H

L

# FIG.3

# FIG.4

# FIG.5

## FIG.6

## FIG.7

# FIG.8

# FIG.9

# FIG.10

# FIG.11

# FIG.12

# FIG.13

# FIG.14

# FIG.15

## INTERNATIONAL SEARCH REPORT

| International application No. |
|---|
| **PCT/JP2023/004426** |

### A. CLASSIFICATION OF SUBJECT MATTER

***A01M 1/14***(2006.01)i
FI:   A01M1/14 J; A01M1/14 L

According to International Patent Classification (IPC) or to both national classification and IPC

### B. FIELDS SEARCHED

Minimum documentation searched (classification system followed by classification symbols)

A01M1/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-528785 A (DOMOBIOS) 17 October 2019 (2019-10-17) | 1-4, 6-12 |
| | claims, paragraphs [0078]-[0085], fig. 9, 10 | |
| Y | claims, paragraphs [0078]-[0085], fig. 9, 10 | 1-3, 6-12 |
| X | JP 2014-64499 A (SHIMADA CORP) 17 April 2014 (2014-04-17) | 1, 3, 5, 10-12 |
| | claims, paragraph [0013], drawings | |
| Y | claims, paragraph [0013], drawings | 1-3, 6-12 |
| Y | CD-ROM of the specification and drawings annexed to the request of Japanese Utility Model Application No. 77108/1992 (Laid-open No. 38549/1994) (FUJIE, Shoichi) 24 May 1994 (1994-05-24), paragraph [0010] | 8-10 |
| Y | JP 2020-68721 A (SHIMADA CORP) 07 May 2020 (2020-05-07) | 9-10 |
| | claims, paragraph [0017] | |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/004426**

| Patent document cited in search report | | | Publication date (day/month/year) | Patent family member(s) | | | Publication date (day/month/year) |
|---|---|---|---|---|---|---|---|
| JP | 2019-528785 | A | 17 October 2019 | US | 2018/0077917 | A1 | |
| | | | | claims, paragraphs [0086]-[0093], fig. 9, 10 | | | |
| | | | | WO | 2018/054974 | A1 | |
| | | | | EP | 3515186 | A1 | |
| | | | | CA | 3037504 | A1 | |
| | | | | AU | 2017331332 | A | |
| | | | | KR | 10-2019-0069424 | A | |
| | | | | CN | 110022679 | A | |
| | | | | BR | 112019005401 | A | |
| | | | | MX | 2019003227 | A | |
| | | | | ZA | 201902149 | B | |
| | | | | RU | 2019111184 | A | |
| JP | 2014-64499 | A | 17 April 2014 | (Family: none) | | | |
| JP | 6-38549 | U1 | 24 May 1994 | (Family: none) | | | |
| JP | 2020-68721 | A | 07 May 2020 | (Family: none) | | | |

Form PCT/ISA/210 (patent family annex) (January 2015)

24

**EP 4 458 148 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20180077917 A

- JP 2006136296 A